# EUROPEAN PATENT APPLICATION

(11) **EP 4 675 887 A1**
(43) Date of publication of application: **07.01.2026**
(21) Application number: 23929174.3
(22) Date of filing: 28.03.2023
(51) Int. Cl.: H02J 13/00

(54) **ENERGY STORAGE CONTROL APPARATUS, ENERGY STORAGE SYSTEM, AND ENERGY STORAGE CONTROL METHOD**

(71) Applicant: Contemporary Amperex Future Energy Research Institute (Shanghai) Limited, Shanghai 200241 (CN); Contemporary Amperex Technology Co., Limited, Ningde, Fujian 352100 (CN)
(72) Inventor: LU, Yanhua, Ningde, Fujian 352100 (CN); YU, Dongxu, Ningde, Fujian 352100 (CN); LIU, Siyuan, Shanghai 200241 (CN); LUO, Jun, Shanghai 200241 (CN); LIU, Ningyuan, Shanghai 200241 (CN); SHEN, Zheyuan, Shanghai 200241 (CN)
(74) Representative: Gong, Jinping
(86) International application number: PCT/CN2023/084411
(87) International publication number: WO 2024/197575

(57) **Abstract**

An energy storage control apparatus, an energy storage system, and an energy storage control method are provided. The energy storage control apparatus includes a power module, an energy storage valve integrated control apparatus, and a battery module. The energy storage valve integrated control apparatus includes functional boards, a first main control board, and a connection board; where the functional boards are communicatively connected to the power module and the battery module, respectively; the functional boards are connected to the connection board, and the connection board is connected to the first main control board. Through the energy storage valve integrated control apparatus in the energy storage control apparatus, functional boards communicatively connected to the power module and the battery module are integrated into a single unit, with the first main control board directly performing data processing to achieve control and protection of the power module and the battery module, thereby enabling high-speed internal data sharing among underlying devices of the energy storage control apparatus and improving the information interaction efficiency and performance of the energy storage control apparatus.

## Description

### TECHNICAL FIELD

The present application relates to the field of energy storage technologies in power systems, and particularly to an energy storage control apparatus, an energy storage system, and an energy storage control method.

### BACKGROUND

To accelerate the construction of a future new-type power system and promote a low-carbon energy transition, research on energy storage systems is crucial. Currently, energy storage systems have significant demands for information interaction. However, in traditional energy storage systems, the efficiency of information interaction between underlying units and valve control systems is low, and the information available for interaction is highly limited, resulting in lower performance of the energy storage system.

### SUMMARY

According to various embodiments of the present application, an energy storage control apparatus, an energy storage system, and an energy storage control method are provided.

According to a first aspect, the present application provides an energy storage control apparatus including a power module, an energy storage valve integrated control apparatus, and a battery module; where the energy storage valve integrated control apparatus includes functional boards, a first main control board, and a connection board; where the functional boards are communicatively connected to the power module and the battery module, respectively; the functional boards are connected to the connection board, and the connection board is connected to the first main control board.

In the energy storage control apparatus, the functional boards communicatively connected to the power module and the battery module are integrated into a single unit through the energy storage valve integrated control apparatus, with the first main control board directly performing data processing to achieve control and protection of the power module and the battery module, thereby enabling high-speed internal data sharing among underlying devices of the energy storage control apparatus and improving the information interaction efficiency and performance of the energy storage control apparatus.

In a possible implementation, the energy storage valve integrated control apparatus includes a chassis, the chassis being a metal enclosure of the energy storage valve integrated control apparatus.

With the chassis being configured as a metal enclosure, the energy storage valve integrated control apparatus is provided with electromagnetic shielding functionality, which can prevent electric shocks, reduce the likelihood of electric shock when personnel simultaneously contact two modules, and enhance the overall safety of the energy storage control apparatus. Designing the chassis to be equipotential with the power module enables the energy storage valve integrated control apparatus and the power module to share a common potential amplitude reference, facilitating direct signal acquisition between systems based on the same electrical level channel.

In a possible implementation, the energy storage control apparatus further includes a battery management unit, where the functional boards are communicatively connected to the battery module through the battery management unit.

Through the above method, the battery management unit collects and processes data from the battery module, and implements hierarchical control, reducing the burden on the energy storage valve integrated control apparatus, enables smoother internal interaction by transitioning from external communication to internal data sharing, and improves the information interaction efficiency with the battery module.

In a possible implementation, the functional boards include a driver board; the driver board is communicatively connected to the power module.

Through the above method, the driver board communicates with the power module, and the obtained state information of the power module is directly transmitted to the first main control board of the energy storage valve integrated control apparatus. Internal data analysis and control within the energy storage valve integrated control apparatus may be supported through the first main control board, further enhancing the integration level of the energy storage system.

In a possible implementation, the functional boards include a voltage acquisition board; the voltage acquisition board is communicatively connected to the power module.

Through the above method, by providing a voltage acquisition board within the energy storage valve integrated control apparatus to collect first data of the power module, sampling of the capacitor voltage of the power module can be achieved, enabling the main control board to monitor the capacitor voltage of the power module, thereby improving the real-time performance of control and protection actions.

In a possible implementation, the functional boards include a communication board; the communication board is communicatively connected to the battery module.

Through the above method, the communication board communicates with the battery module, and the obtained second data of the battery module is directly transmitted to the first main control board of the energy storage valve integrated control apparatus. Internal data analysis and control within the energy storage valve integrated control apparatus is supported through the first main control board, further improving the data upload rate of the battery module and the integration level of the energy storage valve integrated control apparatus.

According to a second aspect, the present application provides an energy storage system including a valve base controller and the energy storage control apparatus according to the first aspect, where the energy storage control apparatus is communicatively connected to the valve base controller.

Through the above method, the energy storage control apparatus is communicatively connected to the valve base controller, achieving internal data sharing, reducing communication failures, and improving the energy storage information interaction efficiency and the overall performance of the energy storage system.

In a possible implementation, the energy storage valve integrated control apparatus is communicatively connected to the valve base controller.

Through the above method, the energy storage control apparatus communicates with the valve base controller through the energy storage valve integrated control apparatus, enabling internal data sharing to upload data of the power module or the battery module to the valve base controller and directly acquire control data issued by the valve base controller for the power module or the battery module, thereby controlling the power module and the battery module accordingly; this improves the efficiency of internal data transmission and the overall performance of the energy storage system.

In a possible implementation, an expansion chassis includes a communication interface board and a second main control board; the expansion chassis is communicatively connected to the energy storage valve integrated control apparatus through the communication interface board; the expansion chassis is communicatively connected to the valve base controller through the second main control board.

Through the above method, the expansion chassis is connected to the energy storage valve integrated control apparatus through the communication interface board, and the second main control board is connected to the valve base controller, integrating the chassis controlling the power module and the battery module, making the layout of the valve base controller, the power module, and the battery module more centralized and stable, rendering the energy storage system more modular and lightweight, and facilitating maintenance.

In a possible implementation, the energy storage system further includes a peripheral device; and the peripheral device is communicatively connected to the energy storage control apparatus and/or the valve base controller.

Through the above method, the communicative connection of the peripheral device with the energy storage control apparatus and/or the valve base controller can reduce the number of peripheral devices, enabling functional multiplexing of the peripheral device, that is, simultaneously supporting control and protection of the power module and the battery module; through functional multiplexing, the cost of the energy storage system is reduced; simultaneously, the number of communication interfaces is reduced, lowering the probability of various data communication failures and the difficulty of maintenance and debugging of the energy storage system.

In a possible implementation, the energy storage system includes an expansion chassis; the energy storage control apparatus and/or the valve base controller is communicatively connected to the peripheral device through the expansion chassis.

Through the above method, the peripheral device is connected to the energy storage valve integrated control apparatus of the valve base controller and the energy storage control apparatus through the expansion chassis, simplifying the hierarchy and component count of the energy storage system, and through the configuration of the expansion chassis, enabling deep integration of battery management and converter valve control based on the peripheral device while supporting structural topology of the energy storage system, thereby facilitating application scenarios with extensive information interaction with the peripheral device.

In a possible implementation, the expansion chassis in the energy storage system includes a second main control board; the expansion chassis is communicatively connected to the peripheral device through the second main control board.

Through the above method, the second main control board of the expansion chassis is communicatively connected to the peripheral device, making the layout of the peripheral device more centralized and stable, rendering the energy storage system more modular and lightweight, and facilitating maintenance.

In a possible implementation, the peripheral device includes a waveform recording device and/or a monitoring device; the waveform recording device is communicatively connected to the expansion chassis through a first link; and/or the waveform recording device is communicatively connected to the valve base controller through a second link; and/or the monitoring device is communicatively connected to the expansion chassis through a third link; and/or the monitoring device is communicatively connected to the valve base controller through a fourth link.

The first link and the second link are respectively based on high-speed serial link communication, and the third link and the fourth link are respectively based on gigabit Ethernet protocol communication.

Through the above method, the multiplexing configuration of the peripheral device can reduce the number of devices and interfaces, thereby reducing the number of communication optical fibers, lowering the cost of the energy storage system; simultaneously, communication via high-speed serial links and gigabit Ethernet protocols enhances the efficiency, stability, and reliability of data transmission.

In a possible implementation, the peripheral device further includes a cooling system and/or a fire suppression system; the cooling system is communicatively connected to the expansion chassis through a fifth link; the fire suppression system is communicatively connected to the expansion chassis through a sixth link.

The fifth link and the sixth link are respectively based on 100-megabit Ethernet protocol communication.

Through the above method, integrating and multiplexing a cooling system and/or a fire suppression system in the energy storage system effectively reduces the number of control chassis and interfaces of the valve base controller, mitigating communication anomalies due to optical fiber damage, loose connections, or long-term aging of optical modules, thereby enhancing the reliability of the energy storage system.

According to a third aspect, the present application provides an energy storage control method applied to the energy storage control apparatus according to the first aspect. The method includes:
acquiring first data corresponding to the power module and second data corresponding to the battery module;
sending the first data and the second data to a valve base controller;
acquiring control data fed back by the valve base controller based on the first data and the second data; and
controlling the power module and/or the battery module based on the control data.

Through the above method, high-speed internal data sharing among underlying devices of the energy storage control apparatus is enabled, improving the information interaction efficiency and performance of the energy storage control apparatus.

In a possible implementation, the first data includes first state information of the power module, and the control data includes a first drive signal; and the sending the first data of the power module to the valve base controller includes: sending the first state information of the power module to the valve base controller;
the acquiring control data fed back by the valve base controller based on the first data and controlling the power module based on the control data includes: acquiring the first drive signal fed back by the valve base controller based on the first state information; performing switching control on a switching transistor in the power module based on the first drive signal.

Through the above method, performing switching control on the switching transistor in the power module based on the first drive signal implements a dead-time protection function for the power module, enhancing control reliability.

In a possible implementation, the second data includes second state information of the battery module, and the control data includes a second drive signal, and the sending the second data of the battery module to the valve base controller includes: sending the second state information of the battery module to the valve base controller;
the acquiring control data fed back by the valve base controller based on the second data and controlling the battery module based on the control data includes: acquiring the second drive signal fed back by the valve base controller based on the second state information; performing open-close control on a relay in the battery module based on the second drive signal.

Through the above method, performing open-close control on the relay in the battery module based on the second drive signal implements a protection function for the battery module, enhancing control reliability.

In a possible implementation, the method further includes: sending the first data of the power module and/or the second data of the battery module to the peripheral device, where the first data and/or the second data are configured to instruct the peripheral device to perform control or protection operations.

In a possible implementation, the peripheral device includes a waveform recording device. The method further includes:
sending the first data and/or the second data to the waveform recording device; where the waveform recording device is configured to generate a waveform recording file upon receiving the first data and/or the second data; the waveform recording file being used for fault analysis of the power module and the battery module.

In a possible implementation, the peripheral device includes a monitoring device. The method further includes:
sending the first data and/or the second data to the monitoring device; where the monitoring device is configured to generate an operational status interface of the energy storage system upon receiving the first data and/or the second data, and receive an operation instruction input by a user based on the system operational status interface; and receiving the operation instruction of the user fed back by the monitoring device, and monitoring the power module and/or the battery module based on the operation instruction.

In a possible implementation, the peripheral device includes a cooling system; the method further includes:
sending the first data and/or the second data to the cooling system; where the cooling system is configured to generate a cooling instruction upon receiving the first data and/or the second data; and receiving the cooling instruction fed back by the cooling system, and performing cooling control on the power module and/or the battery module based on the cooling instruction.

In a possible implementation, the peripheral device includes a fire suppression system. The method further includes:
sending the first data and/or the second data to the valve base controller; where the valve base controller is configured to send operational state information of the energy storage system to the fire suppression system based on the first data and/or the second data; and the fire suppression system is configured to issue an alarm signal when the operational state information exceeds an alarm threshold.

Through the above method, the energy storage valve integrated control apparatus can respectively acquire the first data of the power module and the second data of the battery module, and process the first data and the second data, thereby achieving internal data sharing within the energy storage control apparatus and improving the transmission efficiency of each data. Through multiplexing of various peripheral devices for the battery module, the power module, and the valve base controller, the control and protection functions for the battery module and the power module are integrated, enhancing the overall performance of the energy storage control apparatus and reducing the cost of the entire energy storage system.

### BRIEF DESCRIPTION OF DRAWINGS

To more clearly illustrate the technical solutions in the embodiments of the present application or the prior art, the drawings required for describing the embodiments or the prior art are briefly introduced below. It is apparent that the drawings described below are merely some embodiments of the present application, and other drawings may be obtained by those of ordinary skill in the art based on these drawings without creative efforts.
FIG. 1 is a schematic structural diagram of an energy storage control apparatus provided by an embodiment of the present application;
FIG. 2 is another schematic structural diagram of an energy storage control apparatus provided by an embodiment of the present application;
FIG. 3 is a schematic structural diagram of an energy storage system provided by an embodiment of the present application;
FIG. 4 is another schematic structural diagram of an energy storage system provided by an embodiment of the present application;
FIG. 5 is a schematic structural diagram of an energy storage system provided by an embodiment of the present application;
FIG. 6 is another schematic structural diagram of an energy storage system provided by an embodiment of the present application;
FIG. 7 is another schematic structural diagram of an energy storage system provided by an embodiment of the present application;
FIG. 8 is another schematic structural diagram of an energy storage system provided by an embodiment of the present application;
FIG. 9 is another schematic structural diagram of an energy storage system provided by an embodiment of the present application;
FIG. 10 is another schematic structural diagram of an energy storage system provided by an embodiment of the present application;
FIG. 11 is a specific schematic structural diagram of an energy storage system provided by an embodiment of the present application;
FIG. 12 is a schematic structural diagram of a board of an energy storage valve integrated control apparatus provided by an embodiment of the present application;
FIG. 13 is a schematic structural diagram of a board of an expansion chassis provided by an embodiment of the present application;
FIG. 14 is a schematic flowchart of an implementation of an energy storage control method provided by an embodiment of the present application.

### DESCRIPTION OF EMBODIMENTS

The embodiments of the technical solutions of the present application will be described in detail below in conjunction with the drawings. The following embodiments are merely intended to more clearly illustrate the technical solutions of the present application and are used as examples, which do not limit the scope of protection of the present application.

Unless otherwise defined, all technical and scientific terms used herein have the same meaning as commonly understood by those skilled in the technical field of the present application; the terms used herein are for the purpose of describing specific embodiments only and are not intended to limit the present application; the terms "include" and "have" and any variations thereof in the specification, claims, and the above description of the drawings of the present application are intended to cover non-exclusive inclusion.

In the description of the embodiments of the present application, technical terms such as "first" and "second" are used only to distinguish different objects and should not be understood as indicating or implying relative importance or implicitly indicating the number, specific order, or primary-secondary relationship of the technical features indicated. In the description of the embodiments of the present application, "multiple" means two or more, unless otherwise explicitly and specifically defined.

In this specification, reference to "embodiment" means that specific features, structures, or characteristics described in connection with the embodiment may be included in at least one embodiment of the present application. The appearance of this phrase in various places in the specification does not necessarily refer to the same embodiment, nor is it an independent or alternative embodiment mutually exclusive with other embodiments. Those skilled in the art explicitly and implicitly understand that the embodiments described herein may be combined with other embodiments.

In the description of the embodiments of the present application, the term "and/or" merely describes an association relationship of associated objects, indicating that three relationships may exist, for example, A and/or B may indicate: A exists alone, A and B exist simultaneously, and B exists alone. Additionally, the character "/" herein generally indicates an "or" relationship between the associated objects.

In the description of the embodiments of the present application, the term "multiple" refers to two or more (including two), similarly, "multiple groups" refers to two or more groups (including two groups), and "multiple pieces" refers to two or more pieces (including two pieces).

In the description of the embodiments of the present application, technical terms such as "center," "longitudinal," "transverse," "length," "width," "thickness," "upper," "lower," "front," "rear," "left," "right," "vertical," "horizontal," "top," "bottom," "inner," "outer," "clockwise," "counterclockwise," "axial," "radial," "circumferential," and the like, indicate orientations or positional relationships based on the orientations or positional relationships shown in the drawings, and are only for the convenience of describing the embodiments of the present application and simplifying the description, rather than indicating or implying that the referred device or element must have a specific orientation, be constructed and operated in a specific orientation, and thus cannot be construed as limiting the embodiments of the present application.

In the description of the embodiments of the present application, unless otherwise explicitly specified and limited, technical terms such as "install," "connect," "join," "fix," and the like, should be understood in a broad sense, for example, it may be a fixed connection, a detachable connection, or an integral formation; it may be a mechanical connection or an electrical connection; it may be a direct connection or an indirect connection through an intermediate medium, and it may be the internal communication of two elements or the interaction relationship between two elements. Those of ordinary skill in the art can understand the specific meanings of the above terms in the embodiments of the present application according to specific circumstances.

With the continuous development of new energy generation technology, to accelerate the construction of a future new-type power system and promote a low-carbon energy transition, fully leveraging flexible DC transmission technology to support the new-type power system, research on flexible DC equivalent synchronous generator technology is crucial. The power output from islanded new energy through flexible DC has volatility and randomness, making it difficult for an equivalent synchronous generator to provide rotational inertia to the system, and the design of flexible DC energy storage is an important technical means to address this issue.

Currently, in the design solutions for new energy storage, there are significant demands for information interaction. However, traditional valve control systems and battery management systems (Battery Management System, BMS) adopt a separated design, making the power module control unit SMC (Sub-Module Controller) and battery management controller (Battery Management Controller, BMC) independently manage the power module and the battery module, respectively, and belong to different manufacturer systems; as the voltage level increases, the communication rate for battery data transmission from underlying units to the valve control system is slow, and the interactive information is very limited, making it difficult for traditional energy storage systems to support the development needs of future high-voltage flexible DC energy storage technology. Since both systems are equipped with independent monitoring devices, control chassis, waveform recording devices, cooling systems, and fire suppression systems, this leads to increased costs and increased difficulty in maintenance and debugging.

Moreover, the two systems are independently developed by different manufacturers, and final docking, debugging, and integration are completed on-site, resulting in cumbersome work and a high likelihood of errors. The two systems are designed separately, where the data interaction method between underlying units limits system performance, leading to bottlenecks in data interaction. Due to the lack of an integrated design, secondary control and protection devices are numerous and distributed, which is not conducive to the modular design of the energy storage valve tower, nor to the lightweight design of the energy storage valve tower. Moreover, because the systems are developed independently, the degree of integration is limited, leading to a large number of communication interfaces between the systems. This is likely to lead to various types of communication failures and requires more manpower and time during on-site integration and commissioning.

The bottleneck in data interaction between the two systems mainly lies in the fact that data interaction between the two systems primarily relies on low-speed communication interfaces between the power module control unit and the battery cluster management unit; the two are interconnected through external communication optical fibers, with the highest communication rate of the external communication optical fibers being only 20 Mbps, so currently only some key battery data can be transmitted to the upper-level valve control system, while other battery data (such as cell voltage, temperature, and current) are connected to BMS monitoring device through independent communication links. This cannot meet the traffic scenarios requiring extensive information interaction, affecting the real-time performance of control and protection actions, impacting the data upload rate of the BMS system, and constraining the improvement of system performance.

In addition, since the two systems are designed independently, peripheral devices (such as monitoring equipment, control chassis, waveform recording devices, cooling systems, and fire suppression systems) cannot achieve functional multiplexing, leading to increased costs.

To address the series of issues mentioned above, the embodiments of the present application provide an energy storage control apparatus, an energy storage system, and an energy storage control method, which can integrate the control and protection of the battery module and the power module into a single design, changing external communication to internal data sharing, thereby improving the information interaction efficiency and overall performance of the entire energy storage system.

The specific architecture of the energy storage control apparatus is further introduced below through specific embodiments. The energy storage control apparatus can be applied to the control of an energy storage valve, which can be a full-bridge or half-bridge energy storage valve unit. Taking a half-bridge energy storage valve unit as an example, the half-bridge energy storage valve unit may include a power module and a battery module, the power module being a half-bridge power module, which can be connected to an external power grid and the battery module, with a capacitor C and a resistor R arranged in parallel on the side where the power module is connected to the battery module.

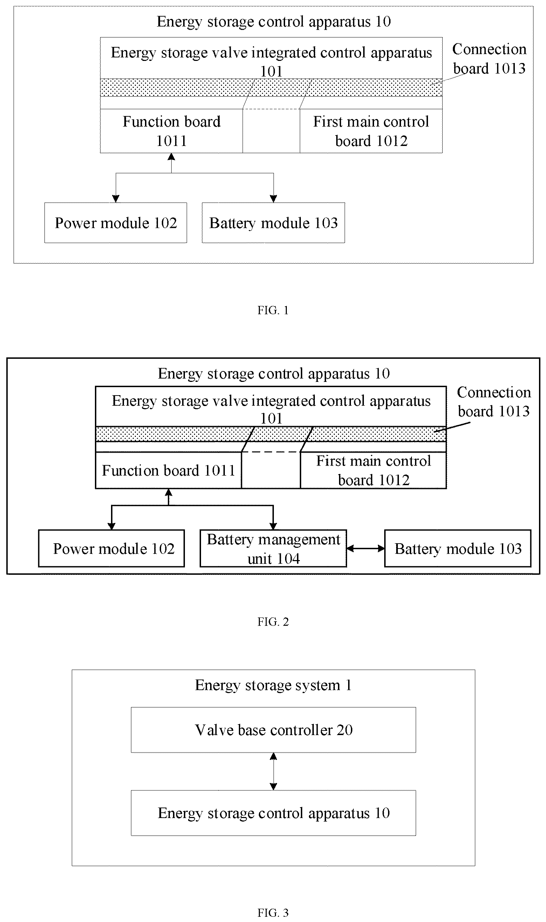

Referring to FIG. 1, FIG. 1 is a schematic structural diagram of an energy storage control apparatus provided by an embodiment of the present application. As shown in FIG. 1, the energy storage control apparatus 10 may include an energy storage valve integrated control apparatus 101, a power module 102, and a battery module 103; the energy storage valve integrated control apparatus 101 is communicatively connected to the power module 102 and the battery module 103, respectively.

The energy storage valve integrated control apparatus 101 includes functional boards 1011, a first main control board 1012, and a connection board 1013, the functional boards 1011 is communicatively connected to the power module 102 and the battery module 103, respectively, the functional boards 1011 is connected to the connection board 1013 and integrated into the energy storage valve integrated control apparatus, and the connection board 1013 is connected to the first main control board 1012; thus, the functional boards 1011 can communicate with the first main control board 1012 through the connection board 1013.

In some embodiments, the energy storage valve integrated control apparatus 101 in the energy storage control apparatus 10 is communicatively connected to the power module 102 and the battery module 103, respectively, and acquires first data of the power module 102 and second data of the battery module 103; the first data and the second data are aggregated and processed by the energy storage valve integrated control apparatus.

As an example, the first data may include data related to the power module 102, such as IGBT/thyristor/bypass switch state and capacitor voltage values of the power module; the second data may include data related to the battery module 103, such as cell temperature values, SOC/SOH/SOF values of all cells, open-close states of power-on/off relays of a battery pack, and fire suppression status of the electrical cabinet.

As shown in FIG. 2, the energy storage control apparatus 10 may further include a battery management unit 104. The battery module 103 may include a battery cluster formed by multiple battery packs connected in series, each battery pack may be connected to a battery management unit 104 (for example, a sub-battery management unit (Sub Battery Management Unit, SBMU)); the functional boards 1011 of the energy storage valve integrated control apparatus 101 can establish a communicative connection with the battery module through the battery management unit 104.

In some embodiments, the functional boards 1011 of the energy storage valve integrated control apparatus 101 may include a driver board and/or a communication board; that is, the functional boards of the energy storage valve integrated control apparatus 101 for data transmission and reception with the power module 102 may be a driver board, and the functional boards of the energy storage valve integrated control apparatus 101 for data transmission and reception with the battery module 103 may be a communication board.

As an example, the driver board conducts data communication with the power module 102, and the energy storage valve integrated control apparatus 101 acquires the first data of the power module 102 (for example, state data of switching transistors) through the driver board or issues control data (for example, drive signals) to the power module 102. For example, the driver board may be connected to the switching transistors or thyristors of the power module 102, and the energy storage valve integrated control apparatus 101 performs operations such as driving, monitoring, and protecting the switching transistors or thyristors; where the switching transistors of the power module 102 may adopt insulated gate bipolar transistors (Insulated Gate Bipolar Transistor, IGBTs).

As an example, the driver board is communicatively connected to the first main control board 1012 through the connection board 1013. The driver board acquires the first data of the power module 102 and sends the first data to the first main control board 1012 through the connection board 1013, with the first main control board 1012 completing data processing and uploading. The driver board and the power module 102 may be directly or indirectly connected.

In some embodiments, the driver board receives a drive signal sent by the first main control board 1012 through a data line of the connection board 1013 and performs switching control on the switching transistors in the power module 102 based on the drive signal, for example, performing delayed switching control on the switching transistors to ensure safety.

Taking the IGBT as an example for the switching transistor, the IGBT drive logic of the driver board is equipped with a dead-time protection function to prevent simultaneous conduction of the upper and lower transistors of a half-bridge IGBT. For example, the driver board is required to turn on the upper transistor at time 0 and the lower transistor at time 1 based on the drive signal. Therefore, during control, the driver board first turns off the upper transistor, delays for a set duration to ensure the upper transistor is fully turned off, and then turns on the lower transistor.

Through the above method, the driver board performs delayed switching control on the switching transistors in the power module 102 based on the drive signal sent by the first main control board 1012, implementing a dead-time protection function for the power module, enhancing control reliability.

In some embodiments, the driver board may receive fault state information fed back by the power module 102 through a data line of the connection board 1013 and send the fault state information to the first main control board 1012 through the data line of the connection board 1013, with the first main control board 1012 generating and outputting a corresponding fault identifier based on the fault state information.

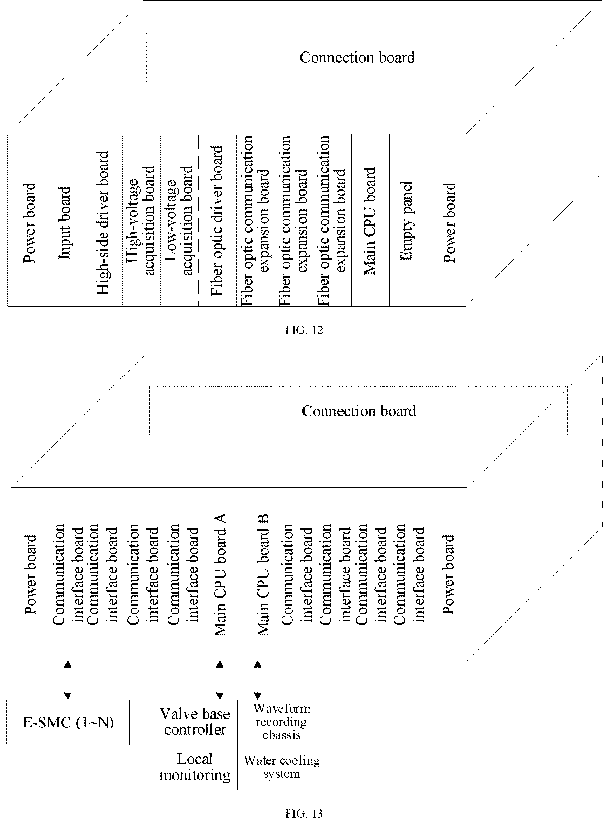

As an example, the fault identifier is used to identify different fault types, such as codes or other identification information, and the first main control board 1012 performs differentiated coding design for different fault states fed back by the IGBTs in the power module 102, facilitating the identification of specific fault types by upper-level apparatuses. For example, the first main control board 1012 may pre-store a correspondence between fault state information and fault identifiers, and upon receiving the fault state information fed back by the power module 102, generate the corresponding fault identifier, and upload it to a host computer. As shown in FIG. 12, the driver board may be a fiber optic driver board.

Through the above method, the driver board sends the fault state information fed back by the power module to the first main control board 1012, and the first main control board 1012 generates and outputs the corresponding fault identifier to identify specific fault types.

In some embodiments, the communication board is communicatively connected to the battery module 103, acquires the second data of the battery module 103, and sends the second data to the first main control board of the energy storage valve integrated control apparatus 101.

As an example, the communication board may be connected to the battery management unit 104 corresponding to the battery module 103 and conduct data communication with the battery management unit 104, such as acquiring the second data of the battery module 103 (for example, battery data) or issuing control data to the battery module 103. This enables the energy storage valve integrated control apparatus 101 to monitor parameters such as cell voltage, current, and insulation of the battery module 103, and calculate information such as the state of charge (State of Charge, SOC), state of health (State of Health, SOH), and state of function (State of Function, SOF) of the battery in the battery management unit 104.

The communication board may also receive a fire alarm signal uploaded by the battery module 103 through the battery management unit 104, convert the fire alarm signal into an electrical signal through photoelectric conversion, and send the electrical signal to the first main control board 1012. This enables the upload of fire alarm information from the battery management unit 104 for timely processing, improving the operational safety of the battery module 103.

As an example, the communication board also has the function of receiving fire alarm signals from the battery management unit 104, where the fire alarm signal adopts a light pulse modulation signal, defining a 100 kHz 50% duty cycle waveform as an idle signal and a 1 MHz 50% duty cycle waveform as an alarm signal. The communication board first converts the received optical signal into an electrical signal through photoelectric conversion, then uses low voltage differential signaling (Low Voltage Differential Signaling, LVDS) technology to transmit it to the first main control board 1012 via the connection board 1013, and finally, the first main control board 1012 completes data decoding and subsequent processing.

In these embodiments, internal data analysis and control within the energy storage valve integrated control apparatus 101 may be supported by using the first main control board 1012 to communicate with the communication board and the driver board through the data line of the connection board 1013, further improving the integration level of the energy storage valve integrated control apparatus 101.

In one embodiment, as shown in FIG. 12, the driver board communicatively connected to the power module 102 in the energy storage valve integrated control apparatus 101 may be a fiber optic driver board; and the communication board communicatively connected to the battery management unit 104 in the energy storage valve integrated control apparatus 101 may be a fiber optic communication expansion board. This improves the efficiency of internal data transmission while ensuring the stability and reliability of data transmission and allows for corresponding expansion based on an increase in the number of battery modules 103.

As an example, the energy storage valve integrated control apparatus 101 may adopt fiber optic communication with the battery management unit 104 and/or the power module 102, ensuring stable and reliable signal transmission. A fiber optic communication expansion board is used to achieve fiber optic communication with the battery management unit 104 at the lower level of the battery cluster, supporting the IEC60044-8 protocol. The fiber optic driver board is used to connect to the IGBTs in the power module 102, issuing IGBT drive instructions. The number of fiber optic communication expansion boards may be two or more, for example, designed as three. The data transmission mode of the communication board and the driver board with external devices is not unique and may be through fiber optics, data lines, or wireless communication.

It should be noted that the above functional boards may be a single board integrating various functions, or may alternatively be multiple boards disposed within the energy storage valve integrated control apparatus based on different functions, for example, multiple boards disposed within the energy storage valve integrated control apparatus based on different functions shown in FIG. 12. The above embodiments and FIG. 12 are only illustrative and do not limit the specific form of the functional boards in the energy storage valve integrated control apparatus.

In some embodiments, as shown in FIG. 12, the first main control board 1012 may be a main CPU (Central Processing Unit, central processing unit) board. The specific type of the main CPU board is not unique; for example, the main CPU board may use a ZYNQ-XC7Z020 series chip, internally integrating two ARM cores and one programmable logic resource. The two ARM cores are divided by function into a management core and a DSP (Digital Signal Processing) core, the management core is used for the management and communication modeling functions of the energy storage valve integrated control apparatus 101, including program loading and self-check management of each functional boards of the energy storage valve integrated control apparatus 101, IEC61850 communication modeling and related services, device operation event management, waveform recording device management, and the like. The DSP core is used to implement algorithm functions, mainly including the estimation of various parameter states (State of X, SOX) of the battery cluster and the control of SOX balancing between electrical cabinets, with the estimation of SOX specifically including the estimation of SOC, SOH, SOP (State of Power), and the like. The programmable logic resource is responsible for the driving of external interfaces, encoding and decoding of communication protocols, and the implementation of high real-time control and protection logic. The external interface driving includes ADC driving control, driving control of temperature and humidity sensors, and the like. The encoding and decoding of communication protocols include decoding of timing signals, IEC60044-8 protocol encoding and decoding functions, IEC61850 protocol encoding and decoding functions; high real-time control and protection logic includes IGBT driving control, synchronous sampling, and parsing of IGBT feedback signals. In addition, the first main control board is also connected to the valve base controller and communicates with the valve base controller.

In some embodiments, the energy storage valve integrated control apparatus 101, the power module 102, and the battery module 103 may be placed at preset positions of an energy storage valve tower. The energy storage valve integrated control apparatus 101 is disposed in an independent electrical cabinet, with its chassis being a metal enclosure, enabling the energy storage valve integrated control apparatus 101 to have electromagnetic shielding functionality based on the metal enclosure; the metal enclosure is designed to have the same potential as the power module 102, preventing electric shocks, reducing the likelihood of electric shock when personnel simultaneously contact two modules, and improving the safety of the entire energy storage control apparatus. The energy storage valve integrated control apparatus 101 may adopt a 4U/6U full-width chassis design.

Through the above embodiments, the energy storage control apparatus 10 performs data interaction with the power module 102 and the battery module 103, respectively, based on the functional boards integrated in the energy storage valve integrated control apparatus 101, integrating the control and protection functions for the power module 102 and the battery module 103 into a single unit through the energy storage valve integrated control apparatus 101. This achieves high-speed internal data sharing among underlying devices in the energy storage control apparatus 10, improving the data interaction efficiency and overall performance of the energy storage control apparatus 10, fundamentally addressing the bottleneck of underlying data interaction between the two systems in traditional architectures, and providing a foundation for the data upload communication link of the battery module.

In some embodiments, the functional boards 1011 of the energy storage valve integrated control apparatus 101 may further include a voltage acquisition board, the voltage acquisition board is communicatively connected to the power module through a data line of the connection board. The voltage acquisition board collects the first data of the power module 102 and sends the first data to the first main control circuit board through the data line of the connection board; as shown in FIG. 12, the voltage acquisition board may be a high-voltage acquisition board.

As an example, the first data includes capacitor voltage value of the power module 102. The voltage acquisition board samples the capacitor voltage value in the power module 102 and sends the acquired sampled voltage to the first main control board through the data line of the connection board.

The voltage acquisition board samples and monitors the capacitor voltage in the power module 102. With the voltage acquisition board disposed within the energy storage valve integrated control apparatus 101, sampling of the capacitor voltage of the power module is achieved, enabling the first main control board to monitor the capacitor voltage of the power module.

As an example, the energy storage valve integrated control apparatus 101 processes the acquired first data through the first main control board 1012. The first main control board 1012 calculates the voltage average after removing maximum and minimum values based on the received sampled voltage. The voltage average may be used by the first main control board 1012 for protection control or other functions of the power module 102. The first main control board 1012 calculates the voltage average after removing the maximum and minimum values, so that false triggering of protection caused by abnormal single-point data can be avoided.

As an example, the specific structure of the voltage acquisition board is not unique. For example, the voltage acquisition board may include an op-amp circuit, an analog-to-digital conversion chip, and a digital isolator, the op-amp circuit is connected to a power amplification module and the analog-to-digital conversion chip, and the digital isolator is connected to the analog-to-digital conversion chip and the connection board. The op-amp circuit, the analog-to-digital conversion chip, and the digital isolator form a sampling loop, and to enhance the reliability of the sampling loop, two analog-to-digital conversion chips are designed for redundant sampling. The op-amp circuit performs operations such as voltage reduction and filtering on the capacitor voltage in the power amplification module, sending the processed signal that the analog-to-digital conversion chip can handle to the analog-to-digital conversion chip, the analog-to-digital conversion chip performs analog-to-digital conversion on the received signal, and the converted data is sent to the connection board through the digital isolator, then uploaded to the first main control board 1012 through the data line of the connection board 1013, avoiding damage to the first main control board 1012 due to front-end signal anomalies.

In these embodiments, the high voltage of the capacitor of the power amplification module is processed and converted using the op-amp circuit and the analog-to-digital conversion chip and transmitted to the connection board through the digital isolator, improving the voltage acquisition reliability of the voltage acquisition board.

In a possible implementation, the voltage acquisition board may further include a monitoring circuit, the monitoring circuit is connected to the op-amp circuit, the analog-to-digital conversion chip, and the connection board, and the monitoring circuit sends an alarm signal to the first main control board 1012 through the data line of the connection board when detecting an anomaly in the op-amp circuit or the analog-to-digital conversion chip.

Specifically, the monitoring circuit monitors the operating voltage of the op-amp circuit, the operating voltage and reference voltage of the analog-to-digital conversion chip in the sampling loop, and immediately reports an alarm event upon detecting an anomaly, for example, sending an alarm signal to the first main control board 1012 when a voltage higher than a preset upper limit or lower than a preset lower limit is detected.

In these embodiments, the monitoring circuit reports an alarm signal to the first main control board 1012 when an anomaly in the op-amp circuit or the analog-to-digital conversion chip is detected, ensuring the operational reliability of the voltage acquisition board.

In some embodiments, as shown in FIG. 12, the functional boards 1011 of the energy storage valve integrated control apparatus 101 may further include a low-voltage acquisition board. The low-voltage acquisition board may be connected to an environmental data acquisition device. The low-voltage acquisition board receives environmental data sent by the environmental data acquisition device and sends the environmental data to the first main control board 1012 through the data line of the connection board, where the environmental data acquisition device may be a temperature sensor, humidity sensor, or the like. The low-voltage acquisition board implements sampling of environmental data and provides physical interfaces for temperature and humidity sensors, with specific interface forms including but not limited to I2C and RS485.

In these embodiments, a low-voltage acquisition board is disposed within the energy storage valve integrated control apparatus 101 to communicate with the environmental data acquisition device, enabling the monitoring and acquisition of environmental data for the energy storage valve integrated control apparatus 101.

In some embodiments, as shown in FIG. 12, the functional boards 1011 of the energy storage valve integrated control apparatus 101 may further include a high-side driver board. The high-side driver board may be connected to a state indication device. The high-side driver board receives a state indication instruction sent by the first main control board 1012 through the data line of the connection board and controls the state indication device based on the state indication instruction. The state indication device may be an indicator light, display screen, speaker, or other devices capable of state indication. Taking the indicator light as an example for the state indication device, the first main control board 1012 may determine a high-voltage or low-voltage state based on the capacitor voltage detected by the voltage acquisition board, then output a state indication instruction to light an external indicator light, indicating that the energy storage valve integrated control apparatus is in a high-voltage or low-voltage state.

In these embodiments, a high-side driver board is disposed within the energy storage valve integrated control apparatus 101 and is connected to the state indication device, facilitating corresponding state indication.

In some embodiments, as shown in FIG. 12, the functional boards 1011 of the energy storage valve integrated control apparatus 101 may further include an input board. The input board may collect external switch signals and state alarm information to monitor external switch signals and state alarm information. The functional boards 1011 of the energy storage valve integrated control apparatus 101 may further include a spare board, that is, the empty panel shown in FIG. 12, used to fill the excess board slots of the energy storage valve integrated control apparatus 101 while allowing for functional expansion. When the energy storage valve integrated control apparatus 101 needs to add boards with other functions, the spare board can be replaced with a board having the new function.

In some embodiments, as shown in FIG. 12, the functional boards 1011 of the energy storage valve integrated control apparatus 101 may further include a power board. The power board is connected to an external DC power supply to access the external DC power supply and supply power to other functional boards.

As an example, the number of power boards may be two or more, and each power board is respectively connected to an independent power bus in the connection board 1013. Specifically, taking the number of power boards as two as an example, a dual power bus design is adopted in the connection board 1013, each power bus is powered by an independent power supply, and the buses remain independent.

In these embodiments, multiple power boards are respectively connected to independent power buses in the connection board 1013, so as to provide independent power supply to other functional boards and improve power supply reliability.

As an example, the above functional boards may be fixedly installed in the chassis of the energy storage valve integrated control apparatus or detachably disposed in the chassis. The specific type and disposed position of the connection board 1013 are not unique; for example, the connection board 1013 may be disposed on the back of the chassis of the energy storage valve integrated control apparatus 101. The connection board 1013 and each functional board are provided with connection terminals, and the connection terminals of each functional boards are connected to the connection terminals on the connection board 1013, enabling communication between functional boards through the internal data lines of the connection board 1013. The type of internal data lines of the connection board 1013 is not unique; for example, the data lines of the connection board 1013 include at least one of CAN bus, 100-megabit Ethernet cable, SERDES line, LVDS differential line, and single-ended signal line, and the specific data line type may be selected based on data size and real-time requirements.

In these embodiments, the specific type of data line in the connection board can be selected based on data transmission needs, facilitating data transmission.

As an example, the functional boards are connected through different data lines of the connection board 1013. For example, the fiber optic communication expansion board is connected to the first main control board 1012 through the SBMU (Slave Battery Management Unit) data bus in the connection board, acquiring the first data sent by the battery management unit 104 and uploading it to the first main control board 1012. The first main control board 1012 is connected to the fiber optic driver board through the corresponding data line of the connection board 1013, transmitting IGBT drive instructions and state information. The voltage acquisition board is connected to the first main control board 1012 through the corresponding data line of the connection board, uploading high-voltage sampling signals to the first main control board 1012. The low-voltage acquisition board is connected to the first main control board 1012 through the corresponding data line of the connection board 1013, uploading low-voltage sampling signals to the first main control board 1012. The first main control board 1012 is connected to the high-side driver board through the corresponding data line of the connection board 1013, issuing indicator light drive signals to the high-side driver board. The input board is connected to the first main control board 1012 through the corresponding data line of the connection board, uploading input signals to the first main control board 1012. The power board is connected to the fiber optic communication expansion board, fiber optic driver board, first main control board 1012, voltage acquisition board, low-voltage acquisition board, high-side driver board, and input board through the power bus in the connection board, supplying power to the corresponding functional boards.

As an example, the energy storage valve integrated control apparatus 101 further includes board guide rails and clips disposed inside the chassis, the respective functional boards are disposed inside the chassis through the board guide rails and fixed with the clips. Specifically, a vertical insertion design may be adopted for the respective functional boards, with board guide rails installed inside the chassis, and the respective functional boards are fixed to the chassis using a clip design. The provision of board guide rails inside the chassis facilitates the installation, removal, and replacement of the respective functional boards, and using clips to fix respective functional boards makes the assembly of the respective functional boards more secure.

In the energy storage valve integrated control apparatus 101, respective functional boards, including boards for data transmission and reception with the battery management unit 104 in the battery module and boards for data transmission and reception with the power module, are disposed in the chassis, and functional boards are communicated through the data lines of the connection board, achieving internal data sharing and improving the efficiency of energy storage information interaction; and through the integrated design of the power module control chassis and the battery cluster control chassis, the layout of the energy storage control apparatus 10 is more centralized and solidified, facilitating the modular and lightweight design of the energy storage control apparatus 10.

Based on the energy storage control apparatus 10 provided in the above embodiments, embodiments of the present application further provide an energy storage system 1. An architecture of the entire energy storage system 1 is further introduced below through specific embodiments.

Referring to FIG. 3, FIG. 3 is a schematic structural diagram of an energy storage system provided by an embodiment of the present application. As shown in FIG. 3, the energy storage system 1 may include the energy storage control apparatus 10 from the above embodiments and a valve base controller 20; and the energy storage control apparatus 10 is communicatively connected to the valve base controller 20.

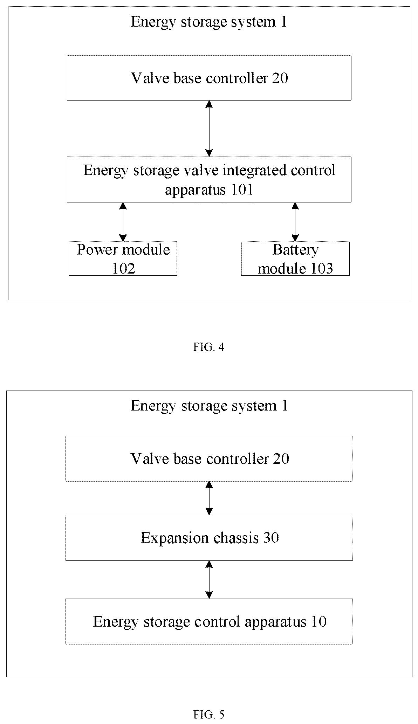

In some embodiments, as shown in FIG. 4, the energy storage valve integrated control apparatus 101 in the energy storage control apparatus 10 is communicatively connected to the valve base controller 20. The energy storage valve integrated control apparatus 101 is communicatively connected to the power module 102 and the battery module 103, respectively, and acquires the first data of the power module 102 and the second data of the battery module 103; the first data and the second data are aggregated and processed by the energy storage valve integrated control apparatus, and based on the communicative connection with the valve base controller 20, the first data and the second data are transmitted to the valve base controller 20.

As an example, after receiving the processed first data and second data sent by the energy storage control apparatus 10, the valve base controller 20 acquires the operation state of the energy storage valve and issues control instructions based on the operation state of the energy storage valve. For example, the valve base controller 20 may issue control instructions to control the engagement and disengagement of the energy storage valve based on the SOC and SOH states of each energy storage valve, combined with the modulation wave issued by the valve base controller 20 and its own voltage equalization algorithm.

In some embodiments, as shown in FIG. 5, the energy storage system 1 further includes an expansion chassis 30, and the energy storage control apparatus 10 is communicatively connected to the valve base controller 20 through the expansion chassis 30.

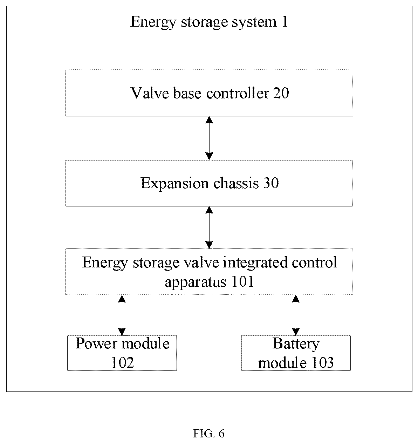

As shown in FIG. 6, the expansion chassis 30 is communicatively connected to the valve base controller 20 and the energy storage valve integrated control apparatus 101, respectively. The expansion chassis 30 is configured to acquire the first data and the second data sent by the energy storage valve integrated control apparatus 101, aggregate the first data and the second data, and send them to the valve base controller 20.

The expansion chassis 30 may include a communication interface board and a second main control board. The expansion chassis 30 is communicatively connected to the first main control board of the energy storage valve integrated control apparatus 101 through the communication interface board; and the expansion chassis 30 is communicatively connected to the valve base controller 20 through the second main control board. In a schematic structural diagram of the expansion chassis shown in FIG. 13, the second main control board may include a main CPU board A and a main CPU board B.

As an example, the expansion chassis 30 is configured to distribute control and protection instructions and aggregate and upload related data of the power module 102 and the battery module 103.

As an example, the communication link established by the communication interface board of the expansion chassis 30 with the energy storage valve integrated control apparatus 101 may adopt fiber optic 100-megabit Ethernet communication. Data transmitted upstream from the energy storage valve integrated control apparatus 101 to the expansion chassis 30 may include state of the IGBT/thyristor/bypass switch of the power module, capacitor voltage value of the power module, voltage values of all cells, temperature values of all cells, SOC/SOH/SOF values of all cells, open-close states of power-on/off relays of a battery pack, fire suppression state of the electrical cabinet, and the like. Data transmitted downstream from the expansion chassis 30 to the energy storage valve integrated control apparatus 101 may include: control of IGBT/thyristor/bypass switches of the power module, open-close control of power-on/off relays of a battery pack, and the like.

As an example, the communication link through which the expansion chassis 30 is communicatively connected to the valve base controller 20 via the second main control board may adopt high-speed serial communication. For example, the Aurora protocol may be selected, with a communication rate not lower than 2 Gbps. The upstream communication data from the expansion chassis 30 to the valve base controller 20 may include: IGBT-related state of the power module, capacitor voltage values of the power module, SOX state of a battery pack, and the like. The downstream communication data from the valve base controller 20 to the expansion chassis 30 may include: control instructions related to the IGBT of the power module, control related to the power-on/off of a battery pack, and the like.

As shown in FIG. 13, the expansion chassis 30 may include two hot-standby main CPU boards (main CPU board A and main CPU board B), several (configurable number) communication interface boards, and two redundant power boards. Main CPU board A and main CPU board B establish communicative connections with all communication interface boards based on the data lines of the connection board, and communication links all use high-speed differential pairs for communication, with a communication rate not lower than 300 Mbps.

As an example, the above boards may be fixedly installed in the chassis of the expansion chassis 30 or detachably disposed in the expansion chassis 30. The specific type and disposed position of the connection board of the expansion chassis 30 are not unique; for example, the connection board may be disposed on the back of the expansion chassis. The connection board and each board are provided with connection terminals, and the connection terminals of each board are connected to the connection terminals on the connection board, enabling communication between boards through the internal data lines of the connection board. The type of internal data lines of the connection board is not unique; for example, the data lines of the connection board include at least one of CAN bus, 100-megabit Ethernet cable, SERDES line, LVDS differential line, and single-ended signal line, and the specific data line type may be selected based on data size and real-time requirements.

In these embodiments, the specific type of data line in the connection board can be selected based on data transmission needs, facilitating data transmission.

As an example, the power board is connected to the communication interface board, main CPU board A, and main CPU board B through the power bus in the connection board, supplying power to the corresponding boards.

As an example, the expansion chassis 30 further includes board guide rails and clips disposed inside the chassis, each board is disposed inside the chassis through the board guide rails and fixed with the clips. Specifically, each board may adopt a vertical insertion design, with board guide rails installed inside the chassis, and each board is fixed to the chassis using a clip design. The board guide rails may be disposed inside the expansion chassis 30, facilitating the installation, removal, and replacement of each board, and respective functional boards are fixed using clips, making the assembly of each board more secure.

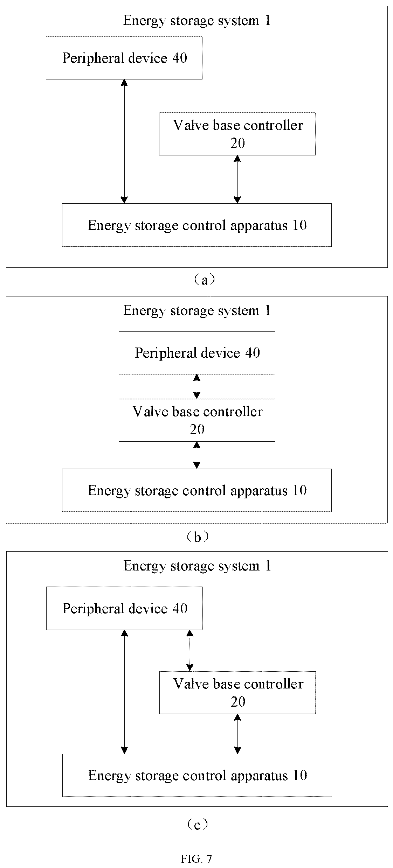

In some embodiments, as shown in FIG. 7, the energy storage system 1 further includes a peripheral device 40; as shown in FIG. 7(a), the peripheral device 40 may be communicatively connected to the energy storage control apparatus 10; or, as shown in FIG. 7(b), the peripheral device 40 may be communicatively connected to the valve base controller 20; or, as shown in FIG. 7(c), the peripheral device 40 may be directly communicatively connected to the energy storage control apparatus 10 and the valve base controller 20, respectively. The peripheral device 40 may directly acquire related data (second data) of the battery module 103 in the energy storage control apparatus 10, or directly acquire data uploaded by the valve base controller 20, or simultaneously acquire data uploaded by both, achieving monitoring of the power module 102 and the battery module 103.

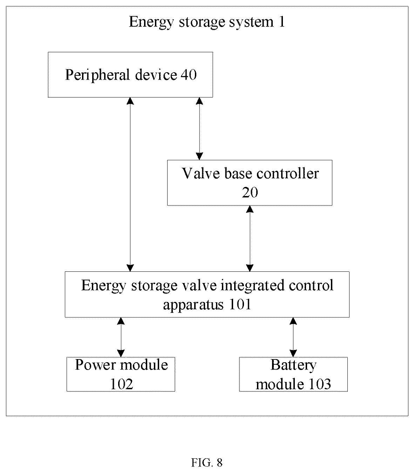

As an example, as shown in FIG. 8, when the peripheral device 40 is directly communicatively connected to the energy storage control apparatus 10 and the valve base controller 20, respectively, the peripheral device 40 may directly communicate with the energy storage valve integrated control apparatus 101 in the energy storage control apparatus 10.

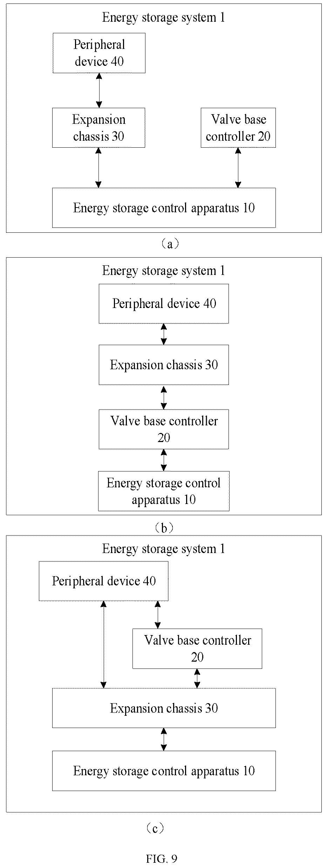

As an example, as shown in FIG. 9, when the energy storage system 1 includes an expansion chassis 30, as shown in FIG. 9(a), the expansion chassis 30 may be communicatively connected to the energy storage control apparatus 10 and the peripheral device 40, respectively; or, as shown in FIG. 9(b), the expansion chassis 30 may be communicatively connected to the valve base controller 20 and the peripheral device 40, respectively; or, as shown in FIG. 9(c), the energy storage control apparatus 10 may be communicatively connected to the valve base controller 20 and the peripheral device 40 through the expansion chassis, respectively.

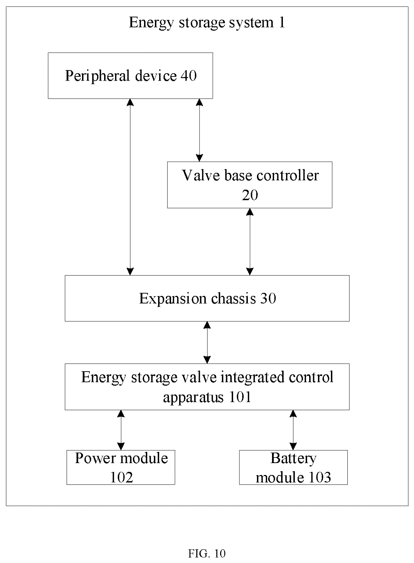

Specifically, as shown in FIG. 10, when the energy storage control apparatus 10 is communicatively connected to the valve base controller 20 and the peripheral device 40 through the expansion chassis 30, respectively, the peripheral device 40 and the valve base controller 20 are communicatively connected to the energy storage valve integrated control apparatus 101 in the energy storage control apparatus 10 through the expansion chassis 30, respectively.

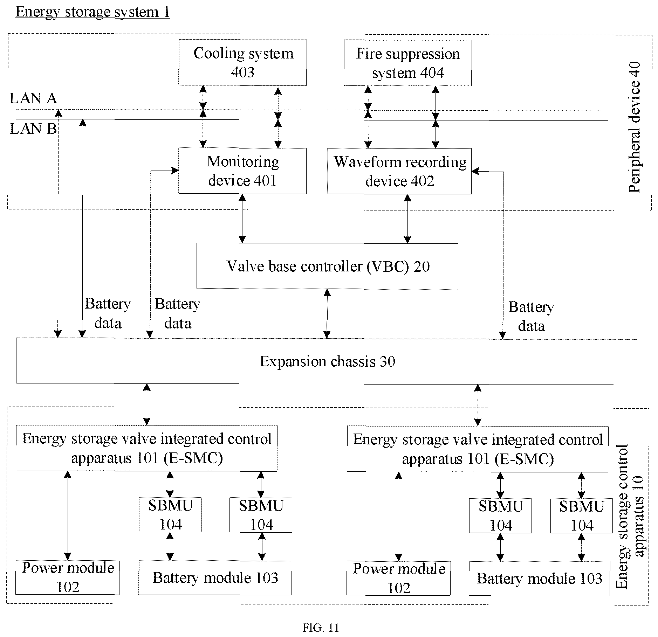

In a schematic structural diagram of the energy storage system 1 shown in FIG. 11, the peripheral device 40 may include a monitoring device 401 and/or a waveform recording device 402; the waveform recording device 402 is communicatively connected to the expansion chassis 30 through a first link; the waveform recording device 402 is communicatively connected to the valve base controller 20 through a second link; the monitoring device 401 is communicatively connected to the expansion chassis 30 through a third link; and the monitoring device 401 is communicatively connected to the valve base controller 20 through a fourth link.

The first link and the second link may be based on high-speed serial link communication, and the third link and the fourth link may be based on gigabit Ethernet protocol communication. For example, the first link and the second link adopt the Aurora protocol for communication, with a communication rate not lower than 2 Gbps.

As an example, as shown in FIG. 13, high-speed serial communication is adopted between the main CPU board of the expansion chassis 30 and the waveform recording device 402. The Aurora protocol may be selected, and the communication rate is not lower than 2 Gbps. The communication content may include: SOX state of a battery pack, power-on/off state of a battery pack, fault level of a battery pack, fire suppression information of a battery pack, insulation state information of a battery pack, SOX state of ae battery cluster, voltage and temperature information of a battery pack, and the like.

As an example, the main CPU board of the expansion chassis 30 adopts high-speed communication with the monitoring device 401. The gigabit Ethernet protocol may be used, and a communication rate is not lower than 1 Gbps. The upstream communication content from the expansion chassis to the monitoring device 401 through the main CPU board may include: SOX state of a battery pack, power-on/off state of a battery pack, fault level of a battery pack, fire suppression information of a battery pack, insulation state information of a battery pack, SOX state of a battery cluster, voltage and temperature information of a battery pack, and the like. The downstream communication content from the monitoring device 401 to the expansion chassis 30 may include: program upgrade control, black start control, power-on/off control, parameter setting and calibration, equalization control instructions, fault reset, and the like.

As shown in FIG. 11, the peripheral device 40 may further include a cooling system 403 and/or a fire suppression system 404; where the cooling system 403 is communicatively connected to the expansion chassis 30 through a fifth link; the fire suppression system 404 is communicatively connected to the expansion chassis 30 through a sixth link.

The fifth link and the sixth link may be based on 100-megabit Ethernet protocol communication.

As an example, the upstream communication content from the expansion chassis 30 to the cooling system 403 through the main CPU board may include: operating mode, fault level, water temperature information, and the like. The downstream communication content from the cooling system 403 to the expansion chassis 30 may include: target cooling water temperature setting instructions, operating mode setting instructions, and the like.

As an example, the communication content between the expansion chassis 30 and the fire suppression system through the main CPU board may include: liquid leakage sensor alarms, thermal runaway alarms, temperature sensor alarm signals, smoke sensor alarm signals, device faults.

The monitoring device 401 is responsible for the dual monitoring function of the valve base controller 20 and the battery management unit 104, and the monitoring interface of the valve base controller 20 may be set independently from the monitoring interface of the battery management unit 104.

Correspondingly, to reduce the burden on the valve base controller (VBC) 20, battery-related data for monitoring, waveform recording, and fire suppression purposes (such as cell temperature, cell voltage, charge-discharge current) are designed with independent communication loops, directly interacting with the monitoring device 401, waveform recording device 402, and cooling system 403 through the main CPU board of the expansion chassis 30.

In addition, as shown in FIG. 11, in the entire energy storage system 1, there are two identical communication links, such as line A (LAN A) and line B (LAN B), that are redundant to each other, and both lines can simultaneously transmit signals and execute control instructions.

In the embodiments of the present application, through the multiplexed communication settings of functional device (such as waveform recording devices and monitoring devices), reduced number of functional devices and interfaces, and thus reduced number of communication optical fibers, the goal of cost reduction for the energy storage system is achieved, facilitating the market promotion of flexible DC energy storage technology. The present application, through the integrated design and functional multiplexing of control and protection functions for the power module and the battery module, effectively reduces the number of control chassis and interfaces, mitigating communication anomalies due to optical fiber damage, loose connections, or long-term aging of optical modules, and enhancing the reliability of the energy storage system.

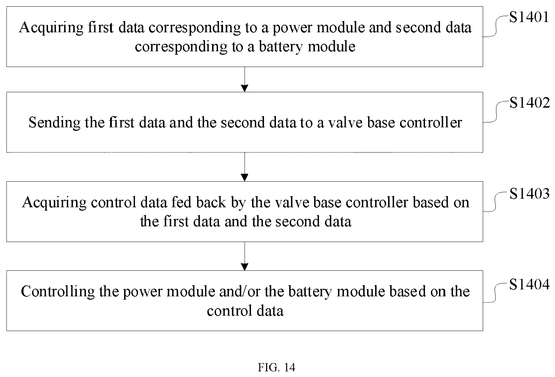

Based on the above energy storage control apparatus 10 and energy storage system 1, as shown in FIG. 14, embodiments of the present application further provide an energy storage control method, and the execution entity of the method may be the above energy storage control apparatus 10. The method is based on the same implementation principles as the above embodiments, and details are not repeated here. The method may include the following steps:
step 1401: acquiring first data corresponding to the power module and second data corresponding to the battery module;
step 1402: sending the first data and the second data to a valve base controller;
step 1403: acquiring control data fed back by the valve base controller based on the first data and the second data; and
step 1404: controlling the power module and/or the battery module based on the control data.

In the above energy storage control method, the energy storage control apparatus 10 communicates between the functional boards 1011, including boards for data transmission and reception with the battery management unit 104 connected to the battery module 103 and boards for data transmission and reception with the power module 102, through the data line of the connection board 1013, achieving internal data sharing and improving the efficiency of energy storage information interaction.

In some embodiments, the first data includes first state information of the power module, and the control data includes a first drive signal; and the sending the first data of the power module 102 to the valve base controller 20 includes: sending the first state information of the power module 102 to the valve base controller 20.

In some embodiments, the acquiring control data fed back by the valve base controller 20 based on the first data and controlling the power module 102 includes: acquiring the first drive signal fed back by the valve base controller 20 based on the first state information; and performing switching control on a switching transistor in the power module 102 based on the first drive signal.

As an example, the energy storage valve integrated control apparatus 101 includes functional boards 1011 and a first main control board 1012. The functional boards 1011 include a driver board, and the driver board acquires state information of the power module 102 and sends the state information to the first main control board 1012.

As an example, the driver board receives a drive signal sent by the first main control board 1012 and performs switching control on the switching transistor in the power module 102 based on the drive signal.

As an example, the driver board receives fault state information fed back by the power module 102 and sends the fault state information to the first main control board 1012; and the first main control board 1012 generates and outputs a corresponding fault identifier based on the fault state information.

As an example, the functional boards 1011 further include a voltage acquisition board. The voltage acquisition board collects the first data of the power module and sends the first data to the first main control board 1012.

In some embodiments, the second data includes second state information of the battery module 103, and the control data includes a second drive signal; and the sending the second data of the battery module 103 to the valve base controller 20 includes: sending the second state information of the battery module 103 to the valve base controller 20.

In some embodiments, the acquiring control data fed back by the valve base controller 20 based on the second data and controlling the battery module 103 includes: acquiring the second drive signal fed back by the valve base controller 20 based on the second state information; and performing open-close control on a relay in the battery module 103 based on the second drive signal.

As an example, the functional boards 1011 include a communication board. The communication board acquires the second data of the battery module 103 and sends the second data to the first main control board 1012.

As an example, the communication board receives a fire alarm signal uploaded by the battery module 103 through the battery management unit 104, converts the fire alarm signal into an electrical signal through photoelectric conversion, and sends the electrical signal to the first main control board 1012.

In some embodiments, the method further includes: sending the first data of the power module 102 and/or the second data of the battery module 103 to the peripheral device 40, where the first data and/or the second data are configured to instruct the peripheral device 40 to perform control or protection operations.

In some embodiments, the peripheral device 40 includes a waveform recording device 402. The method further includes:
sending the first data and/or the second data to the waveform recording device 402; where the waveform recording device 402 is configured to generate a waveform recording file upon receiving the first data and/or the second data; the waveform recording file being used for fault analysis of the power module and the battery module.

The second data may include: SOX state of a battery pack, power-on/off state of a battery pack, fault level of a battery pack, fire suppression information of a battery pack, insulation state information of a battery pack, SOX state of a battery cluster, voltage and temperature information of a battery pack, and the like.

In some embodiments, the peripheral device 40 includes a monitoring device 401. The method further includes:
sending the first data and/or the second data to the monitoring device 401; where the monitoring device 401 is configured to generate an operational status interface of the energy storage system 1 upon receiving the first data and/or the second data, and receive an operation instruction input by a user based on the system operational status interface; and receiving the operation instruction of the user fed back by the monitoring device 401, and monitoring the power module 102 and/or the battery module 103 based on the operation instruction.

The second data may include: SOX state of a battery pack, power-on/off state of a battery pack, fault level of a battery pack, fire suppression information of a battery pack, insulation state information of a battery pack, SOX state of a battery cluster, voltage and temperature information of a battery pack, and the like. The energy storage control apparatus 10 receives control instructions fed back by the monitoring device, such as program upgrade control, black start control, power-on/off control, parameter setting and calibration, equalization control instructions, fault reset, and the like, enabling the monitoring device to monitor the battery module 103 and the valve base controller 20.

In some embodiments, the peripheral device 40 includes a cooling system 403. The method further includes:
sending the first data and/or the second data to the cooling system 403; where the cooling system 403 is configured to generate a cooling instruction upon receiving the first data and/or the second data; and receiving the cooling instruction fed back by the cooling system 403, and performing cooling control on the power module 102 and/or the battery module 103 based on the cooling instruction.

The first data may include data such as the operating mode, fault level, and water temperature information of the power module, and the second data may include data such as the operating mode, fault level, and water temperature information of the battery module; and the cooling instruction may include: target cooling water temperature setting instructions, operating mode setting instructions, and the like.

In some embodiments, the peripheral device 40 includes a fire suppression system 404. The method further includes:
sending the first data and/or the second data to the valve base controller 20; where the valve base controller 20 is configured to send operational state information of the energy storage system 1 to the fire suppression system 404 based on the first data and/or the second data; and the fire suppression system 404 is configured to issue an alarm signal when the operational state information exceeds an alarm threshold.

The alarm signal may include: liquid leakage sensor alarms, thermal runaway alarms, temperature sensor alarm signals, smoke sensor alarm signals, device faults, and the like.

Through the embodiments of the present application, the energy storage valve integrated control apparatus can respectively acquire the first data of the power module and the second data of the battery module, and process the first data and the second data, thereby achieving internal data sharing within the energy storage control apparatus and improving the transmission efficiency of each data. Through multiplexing of various peripheral devices for the battery module, the power module, and the valve base controller, the control and protection functions for the battery module and the power module are integrated, enhancing the overall performance of the energy storage control apparatus and reducing the cost of the entire energy storage system.

It should be understood that the sequence numbers of the steps in the above embodiments do not imply an execution order. The execution order in each process should be determined by its function and internal logic, and should not be construed as any limitation on the implementation processes of the embodiments of the present application.

Technical features of the above embodiments may be combined in any way. For brevity of description, not all possible combinations of the technical features in the foregoing embodiments are described. However, as long as there is no contradiction in the combinations of these technical features, all the combinations should be considered within the scope recorded in this specification.

It should be understood that the above is only to help those skilled in the art better understand the embodiments of the present application, and not to limit the scope of the embodiments of the present application. Those skilled in the art can obviously make various equivalent modifications or changes based on the above examples, for example, certain steps in the various embodiments of the above detection method may be unnecessary, or new steps may be added. Or a combination of any two or more of the above embodiments. Such modified, changed, or combined solutions also fall within the scope of the embodiments of the present application.

It should also be understood that the methods, situations, categories, and divisions of embodiments in the embodiments of the present application are only for the convenience of description and should not constitute special limitations, and features in various methods, categories, situations, and embodiments may be combined if there is no contradiction.

It should also be understood that in the various embodiments of the present application, unless otherwise specified or there is a logical conflict, the terms and/or descriptions between different embodiments are consistent and may be mutually referenced, and technical features in different embodiments may be combined to form new embodiments based on their internal logical relationships.

Those of ordinary skill in the art can realize that the units and algorithm steps of the examples described in conjunction with the embodiments disclosed herein can be implemented by electronic hardware, or a combination of computer software and electronic hardware. Whether these functions are executed by hardware or software depends on the specific application and design constraints of the technical solution. Those skilled in the art can use different methods to implement the described functions for each specific application, but such implementations should not be considered beyond the scope of the present application.

In the embodiments provided by the present application, it should be understood that the disclosed apparatus/network device and method can be implemented in other ways. For example, the apparatus/network device embodiments described above are merely illustrative; for instance, the division of the modules or units is only a logical function division, and there may be other division methods in actual implementation, such as multiple units or components can be combined or integrated into another system, or some features can be ignored or not executed. In addition, the shown or discussed mutual couplings or direct couplings or communication connections may be implemented through some interfaces. The indirect couplings or communication connections between apparatuses or units may be implemented in electrical, mechanical, or other forms.

Units described as separate components may or may not be physically separate. A component shown as a unit may be one or more physical units, and may be located in one place or distributed across multiple places. Some or all of the units may be selected based on actual needs to achieve the objectives of the solutions in the embodiments.

The above embodiments are only used to illustrate the technical solutions of the present application, and not to limit them; although the present application has been described in detail with reference to the foregoing embodiments, those of ordinary skill in the art should understand that: they can still modify the technical solutions described in the foregoing embodiments, or make equivalent replacements for some of the technical features; and these modifications or replacements do not make the essence of the corresponding technical solutions depart from the spirit and scope of the technical solutions of the embodiments of the present application, and should be included within the protection scope of the present application.

Finally, it should be noted that: the above are only specific implementations of the present application, but the protection scope of the present application is not limited thereto, and any changes or replacements within the technical scope disclosed by the present application should be covered within the protection scope of the present application. Therefore, the protection scope of the present application shall be subject to the protection scope of the claims.

## Claims

1. An energy storage control apparatus, **characterized by** comprising a power module, an energy storage valve integrated control apparatus, and a battery module; wherein
the energy storage valve integrated control apparatus comprises functional boards, a first main control board, and a connection board; wherein the functional boards are communicatively connected to the power module and the battery module, respectively; the functional boards are connected to the connection board, and the connection board is connected to the first main control board.

2. The energy storage control apparatus according to claim 1, **characterized in that** the energy storage valve integrated control apparatus comprises a chassis, the chassis being a metal enclosure of the energy storage valve integrated control apparatus.

3. The energy storage control apparatus according to claim 1 or 2, **characterized in that** the energy storage control apparatus further comprises a battery management unit, and the functional boards are communicatively connected to the battery module through the battery management unit.

4. The energy storage control apparatus according to any one of claims 1 to 3, **characterized in that** the functional boards comprise a driver board; the driver board being communicatively connected to the power module.

5. The energy storage control apparatus according to any one of claims 1 to 4, **characterized in that** the functional boards comprise a voltage acquisition board; the voltage acquisition board being communicatively connected to the power module.

6. The energy storage control apparatus according to any one of claims 1 to 5, **characterized in that** the functional boards comprise a communication board; the communication board being communicatively connected to the battery module.

7. An energy storage system, **characterized in that** the energy storage system comprises a valve base controller and the energy storage control apparatus according to any one of claims 1 to 6, and the energy storage control apparatus is communicatively connected to the valve base controller.

8. The energy storage system according to claim 7, **characterized in that** the energy storage valve integrated control apparatus is communicatively connected to the valve base controller.

9. The energy storage system according to claim 7, **characterized in that** the energy storage system further comprises an expansion chassis; and the energy storage control apparatus is communicatively connected to the valve base controller through the expansion chassis.

10. The energy storage system according to claim 9, **characterized in that** the expansion chassis comprises a communication interface board and a second main control board;
the expansion chassis is communicatively connected to the energy storage valve integrated control apparatus through the communication interface board; and
the expansion chassis is communicatively connected to the valve base controller through the second main control board.

11. The energy storage system according to any one of claims 7 to 10, **characterized in that** the energy storage system further comprises a peripheral device; and the peripheral device is communicatively connected to the energy storage control apparatus and/or the valve base controller.

12. The energy storage system according to claim 11, **characterized in that** the energy storage system comprises an expansion chassis; and the energy storage control apparatus and/or the valve base controller is communicatively connected to the peripheral device through the expansion chassis.

13. The energy storage system according to claim 11, **characterized in that** the expansion chassis in the energy storage system comprises a second main control board; and the expansion chassis is communicatively connected to the peripheral device through the second main control board.

14. The energy storage system according to claim 12, **characterized in that** the peripheral device comprises a waveform recording device and/or a monitoring device; wherein
the waveform recording device is communicatively connected to the expansion chassis through a first link; and/or
the waveform recording device is communicatively connected to the valve base controller through a second link; and/or
the monitoring device is communicatively connected to the expansion chassis through a third link; and/or
the monitoring device is communicatively connected to the valve base controller through a fourth link.

15. The energy storage system according to claim 12, **characterized in that** the peripheral device further comprises a cooling system and/or a fire suppression system; wherein
the cooling system is communicatively connected to the expansion chassis through a fifth link; and
the fire suppression system is communicatively connected to the expansion chassis through a sixth link.

16. An energy storage control method applied to the energy storage control apparatus according to any one of claims 7 to 15, **characterized in that** the method comprises:
acquiring first data corresponding to the power module and second data corresponding to the battery module;
sending the first data and the second data to a valve base controller;
acquiring control data fed back by the valve base controller based on the first data and the second data; and
controlling the power module and/or the battery module based on the control data.

17. The method according to claim 16, **characterized in that** the first data comprises first state information of the power module, and the control data comprises a first drive signal; wherein the sending the first data of the power module to the valve base controller comprises:
sending the first state information of the power module to the valve base controller; and
the acquiring control data fed back by the valve base controller based on the first data and controlling the power module and/or the battery module based on the control data comprises:
acquiring the first drive signal fed back by the valve base controller based on the first state information; and
performing switching control on a switching transistor in the power module based on the first drive signal.

18. The method according to claim 16, **characterized in that** the second data comprises second state information of the battery module, and the control data comprises a second drive signal; wherein the sending the second data of the battery module to the valve base controller comprises:
sending the second state information of the battery module to the valve base controller; and
the acquiring control data fed back by the valve base controller based on the second data and controlling the battery module based on the control data comprises:
acquiring the second drive signal fed back by the valve base controller based on the second state information; and
performing open-close control on a relay in the battery module based on the second drive signal.

19. The method according to any one of claims 16 to 18, **characterized in that** the method further comprises: sending the first data of the power module and/or the second data of the battery module to a peripheral device, wherein the first data and/or the second data are configured to instruct the peripheral device to perform control or protection operations.

20. The method according to claim 19, **characterized in that** the peripheral device comprises a waveform recording device; and the method further comprises:
sending the first data and/or the second data to the waveform recording device; wherein the waveform recording device is configured to generate a waveform recording file upon receiving the first data and/or the second data; the waveform recording file being used for fault analysis of the power module and the battery module.

21. The method according to claim 19, **characterized in that** the peripheral device comprises a monitoring device; and the method further comprises:
sending the first data and/or the second data to the monitoring device; wherein the monitoring device is configured to generate an operational status interface of the energy storage system upon receiving the first data and/or the second data, and receive an operation instruction input by a user based on the system operational status interface; and
receiving the operation instruction of the user fed back by the monitoring device, and monitoring the power module and/or the battery module based on the operation instruction.

22. The method according to claim 19, **characterized in that** the peripheral device comprises a cooling system; and the method further comprises:
sending the first data and/or the second data to the cooling system; wherein the cooling system is configured to generate a cooling instruction upon receiving the first data and/or the second data; and
receiving the cooling instruction fed back by the cooling system, and performing cooling control on the power module and/or the battery module based on the cooling instruction.

23. The method according to claim 19, **characterized in that** the peripheral device comprises a fire suppression system; and the method further comprises:
sending the first data and/or the second data to the valve base controller; wherein the valve base controller is configured to send operational state information of the energy storage system to the fire suppression system based on the first data and/or the second data; and the fire suppression system is configured to issue an alarm signal when the operational state information exceeds an alarm threshold.
